# EUROPEAN PATENT SPECIFICATION

(11) **EP 1 370 512 B1**
(45) Date of publication and mention of the grant of the patent: **29.07.2009**
(21) Application number: 02709146.1
(22) Date of filing: 23.01.2002
(51) Int. Cl.: C07C 69/76, C09K 19/20

(54) **NOVEL MESOGENS**
NEUE MESOGENE
MESOGENES

(30) Priority: 23.01.2001 US 263388 P
(43) Date of publication of application: 17.12.2003
(73) Proprietor: SOUTHWEST RESEARCH INSTITUTE, San Antonio, TX 78238-5166 (US)
(72) Inventor: WELLINGHOFF, Stephen, T., San Antonio, TX 78250 (US); HANSON, Douglas, P., San Antonio, TX 78251 (US)
(74) Representative: Shaw, Matthew Nigel
(86) International application number: PCT/US2002/001909
(87) International publication number: WO 2002/059227

(56) References cited:
- GB-A- 2 297 549
- US-A- 6 060 042
- US-A- 6 136 225

## Description

### Field of the Invention

The invention relates to novel platform molecules, polymerizable mesogens, dimers, and diluents for photocurable resins.

### Background of the Invention

Photocurable resins which are transparent or translucent, radioopaque, have good workability, and have good mechanical strength and stability are useful in medical, dental, adhesive, and stereolithographic applications.

Low polymerization shrinkage is an important property for such resins. In dental applications, the phrase "zero polymerization shrinkage" typically means that the stresses accumulated during curing do not debond the dentin-restorative interface or fracture the tooth or restorative, which can result in marginal leakage and microbial attack of the tooth. Low polymerization shrinkage also is important to achieve accurate reproduction of photolithographic imprints and in producing optical elements.

Another advantageous property for such resins is maintenance of a liquid crystalline state during processing. For comfort in dental applications, the resin should be curable at "room temperature," defined herein as typical ambient temperatures up to body temperature. Preferred curing temperatures are from about 20 °C to about 37 °C. Mesogens which have been found to polymerize in a relatively stable manner at such temperatures are bis 1,4 [4'-(6'-methacryloxyhexyloxy) benzoyloxy] t-butylphenylene mesogens and their structural derivatives. These mesogens have the following general structure:

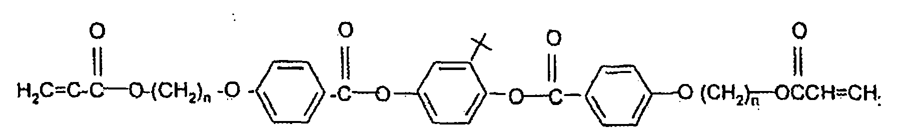

Known synthetic methods for producing these mesogens are costly and have relatively low yields. New synthetic methods and new methods and compositions for controlling rheology of these photocurable resins are needed.

US 6,136,225 (BASF Aktiengesellschaft) discloses polymerizable liquid-crystalline compounds containing a mesogenic group and a number of compositions comprising them which can be used in optical storage display devices and in cholesteric liquid-crystalline colourants.

GB 2 297 549 A (Merck Patent GmbH) discloses monomeric direactive mesogenic compounds, intermediates therefor and polymers therefrom, with the mesogens having two side chains attached thereto having a terminal polymerizable functional group, the mesogens and said functional groups being separated by at least 2 to 20 spacer atoms, wherein both spacer groups have different chain length.

US 6,060,042 (BASF Aktiengesellschaft) discloses the use of cholesteric, liquid-crystalline compositions comprising at least one chiral, liquid-crystalline, polymerizable monomer and other components, with the compositions being used as UV filters in cosmetic and pharmaceutical preparations for protecting the human skin or human hair against sunlight.

### Summary of the Invention

Mesogens are provided having the general formula set out in claim 1.

### Detailed Description of the Invention

The application provides novel platform molecules, novel polymerizable mesogens, novel methods for using the platform molecules, and novel intermediates and synthetic pathways for making the platform molecules and polymerizable mesogens.

### The Mesogens

The mesogens have the general structure set out in claim 1.

The result is effective rheology and workability at room temperature. Suitable R² groups generate asymmetry in the packing of the molecules, and include, but are not necessarily limited to alkyl groups having from about I to 6 carbon atoms and aryl groups. Preferred R² groups include, but are not necessarily limited to alkyl groups having from about 1 to about 4 carbon atoms and phenyl groups. More preferred R² groups are methyl groups, t-butyl groups, isopropyl groups, secondary butyl groups, and phenyl groups. Most preferred R² groups are methyl groups and 1-butyl groups; and
R¹ and R³ are selected from groups less bulky than R², preferably selected from the group consisting of hydrogen atoms and methyl groups, depending upon the relative bulk of R¹, R³, and R².

As used herein, the phrase "terminal functionalities" refers to X and Y where the referenced molecules are platform molecules. "Terminal functionalities" are defined as protective groups and precursors to polymerizable groups, which generally comprise functionalities that readily react with "polymerizable groups" to form reactive ends. Suitable terminal functionalities independently are selected from the group consisting of hydroxyl groups, amino groups, sulfhydryl groups, halogen atoms, and "spacer groups", defined herein as selected from the group consisting of H-(CH₂)ₙ-O- groups, Cl(CH₂)ₙ-O- groups, Br(CH₂)ₙ-O- groups, I(CH₂)ₙ-O-, wherein n is from about 2 to about 12, preferably from about 2 to about 9, more preferably from about 2 to about 6, and most preferably 6, and the CH₂ groups independently can be substituted by oxygen, sulfur, or an ester group; provided that at least 2 carbon atoms separate said oxygen or said ester group. Most preferred terminal functionalities are hydroxyl groups.

Where the mesogen is a polymerizable mesogen, X and/or Y are "polymerizable groups," defined as groups that may be polymerized by nucleophilic addition, free radical polymerization, or a combination thereof. Preferred polymerizable groups are polymerizable by Michael addition. Michael addition requires the addition of a nucleophile and an electron deficient alkene. Groups suitable for polymerization by Michael addition include but are not necessarily limited to the examples found in A. Michael, J. Prakt. Chem. [2] 35, 349 (1887*)*; R. Connor and W. R. McClelland, J. Org. Chem., 3, 570 (1938); and C. R. Hauser, M. T. Tetenbaurn., J. Org. Chem., 23, 1146 (1959), all of which are incorporated by reference herein.

Examples of suitable polymerizable groups include, but are not necessarily limited to substituted and unsubstituted alkenyl ester groups comprising a polymerizable unsaturated carbon-carbon bond, wherein said alkenyl group has from about 2 to about 12 carbon atoms, preferably from about 2 to about 9 carbon atoms, more preferably from about 2 to about 6 carbon atoms. In one embodiment, said substituted alkenyl ester groups comprise at least one halogen atom selected from the group consisting of chorine atoms, bromine atoms, and iodine atoms. Preferred alkenyl esters are acryloyloxy alkoxy groups and methacryloyloxy alkoxy groups. More preferred polymerizable groups include, but are not necessarily limited to cinnamoyloxy groups, acryloyloxy groups, methacryloxy groups, as well as thioalkyloxy groups, acryloyloxy alkoxy groups, and methacryloyloxy alkoxy groups comprising an alkyl moiety having from about 2 to about 12 carbon atoms, preferably about 6 carbon atoms, said alkyl moieties comprising CH₂ groups which independently can be substituted by oxygen, sulfur, or an ester group; provided that at least 2 carbon atoms separate said oxygen or said ester group. Because assymetry suppresses crystallinity while maintaining a nematic tate, it is preferred for X and Y to be different groups.

Certain bis-acryloyloxy alkyloxy and bismethacryloyloxy alkyloxy polymerizable mesogens are the subject of a separate patent based on a copending application, U.S. Patent No. 6,258,974. Applicant here claims mesogens other than those described in U.S. Patent No. 6,258,974.

In a preferred embodiment, a proportion of X and/or Y (or R and/or R⁴) comprises a crystallization retardant. A "crystallization retardant" is defined as a substituent that retards crystallization of the monomers without suppressing the T_{n->isotropic} (the nematic to isotropic transition temperature). The proportion of X and/or Y (or R and/or R⁴) that comprises a crystallization retardant preferably is sufficient to suppress crystallinity of the mesogenic material, particularly at room temperature for dental applications, and to maintain flowability of the mesogenic material under the particular processing conditions. Suitable crystallization retardants include, but are not necessarily limited to halogen atoms. Exemplary halogen atoms are chlorine, bromine, and iodine, preferably chlorine. Typically, the proportion of the crystallization retardant required is about 3-50 mole%, more preferably 10-15 mole%, and most preferably about 14 mole% or less.

Mesomers of higher temperature nematic stability are "mesogenic dimers," formed by reacting X and Y with opposite ends of a bridging agent. Examples of suitable bridging agents include, but are not necessarily limited to dicarboxylic acids (preferably α,ω-carboxylic acids) having from about 4 to about 12 carbon atoms, preferably from about 6 to about 10 carbon atoms, and oligodialkylsiloxanes preferably comprising alkyl groups having from about 1 to about 3 carbon atoms, most preferably methyl groups. When the mesomer is a dimer or another structure comprising components that inherently interfere with crystallization at room temperature, R² need not have a bulk greater than R¹ and R³ Hence, R² may be hydrogen, a halogen atom, or another substituent having lesser bulk than a methylene group.

Depending on the sample preparation, the volumetric photopolymerization shrinkage of these materials at room temperature varies from about 0.9 to about 1.7%, which is a factor of 6-4X improvement over commercially available blends containing 2,2-bis[p-(2'-hydroxy-3'-methacryloxypropoxy)phenylene] propane ("bis-GMA"). Preferably, the polymerizable mesogens exhibit "low polymerization shrinkage," defined herein as about 3 vol.% change or less, preferably about 2 vol.% change or less.

### Synthetic Pathways to Make the Mesogens

In the past, polymerizable mesogens having the foregoing structure were synthesized by a multistep process ("Scheme1"), as shown below:

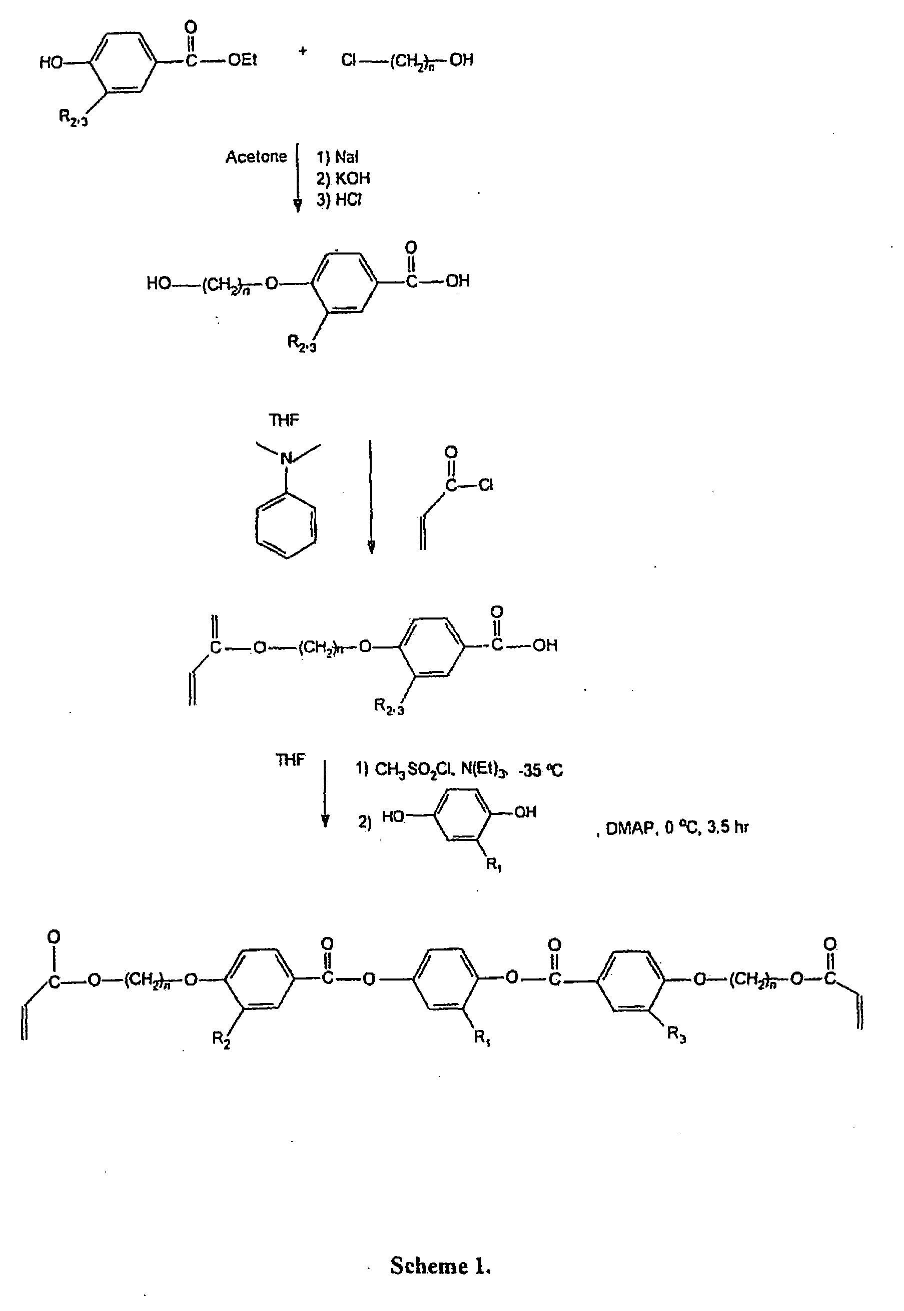

In Scheme 1, molecular ends containing the outer aromatic groups and the alkyl groups were produced first and then coupled to the central aromatic group by diaryl ester bonds. Specifically, the alkali phenoxide salt of p-hydroxybenzoic acid-ethyl ester nucleophile attacked the 6-hydroxy 1-chloro hexane with the aid of iodide catalyst to produce the 6-hydroxyhexyloxybenzoic acid (after hydrolysis of the ethyl ester) by a procedure that yielded at best 70% product. Although rather straightforward, the commercial potential of this synthesis has been limited by the use of the 6-hydroxy 1-chlorohexane. The reaction is run in acetone over several days and requires significant workup. The reaction also produces only about a 40% overall yield, at best, and requires column separation to separate monosubstituted from disubstituted material

New synthetic pathways are provided are provided that use relatively low cost materials to synthesize a central aromatic component comprising end groups that are easily reacted with the desired polymerizable groups. The methods are qualitative, produce high yields, the products are easily purified (preferably by crystallization), and many of the products are more stable than bisalkenes, which must be stabilized against polymerization.

### Brief Summary of the Process, representing background art, useful for understanding the invention

Reactive groups on a phenylene ring at para-positions (preferably hydroxyl groups) form ester linkages with one of two reactive groups in para-positions on two other phenylene rings. The result is three-ring platform mesogens having terminal functionalities. One or both of the terminal functionalities may be coupled with polymerizable groups, preferably a nucleophile and/or an electron deficient alkene-containing group, to produce polymerizable mesogens.

### -Preparation of Molecular Ends and Coupling to Central Aromatic Group

In a first embodiment (Scheme 2), the molecular ends of the mesogen (outer aromatic and alkyl groups) are prepared and coupled to the central aromatic group by diaryl ester bonds. This synthetic pathway is illustrated and described in detail below: 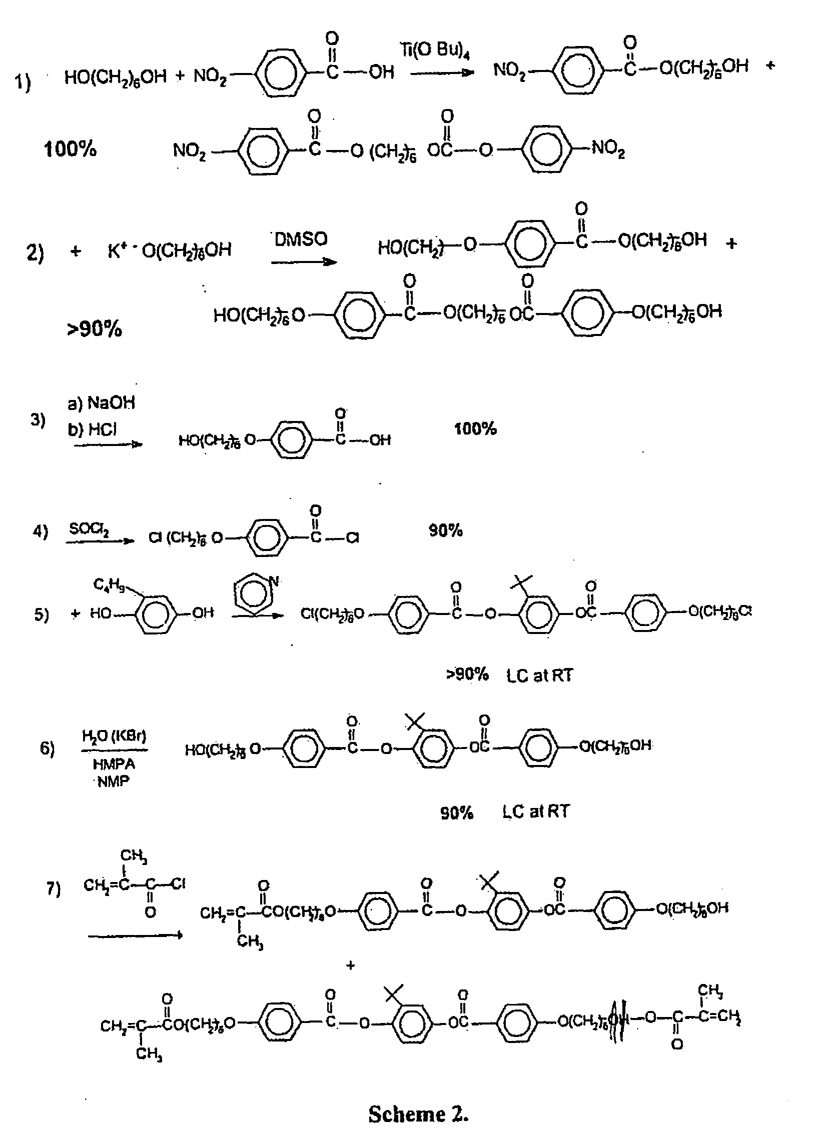 Exemplary "platform molecules" are illustrated in (6), above.

To summarize Scheme 2, bis 1,4 [4"-(6'-chloroalkyloxy)benzoyloxy] R²⁻phenylene, preferably bis 1,4 [4"-(6'-chlorohexyloxy) benzoyloxy] t-butylphenylene, is converted to the analogous bis ω-hydroxy or ω-hydroxy chloro compound. The hydroxy- compound (the platform molecule) may be terminated with one or more polymerizable groups. Preferred polymerizable groups are nucleophilic and electron deficient groups, most preferably independently selected from the group consisting of acryloyl groups, methacryloyl groups, and cinnamoyl groups.

### More particularly:

(1) 4-nitrobenzoic acid is dissolved in an excess of the desired 1,6-dihydroalkane, preferably 1.6-dihydroxyhexane, in the presence of a suitable esterification catalyst. Suitable catalysts include, but are not necessarily limited to titanium alkoxides, tin alkoxides, sulfonic acid, and the like. A preferred catalyst is Ti(OBu)₄. The dissolution occurs at atmospheric pressure at a temperature of from about 120 °C to about 140 °C, with stirring. If excess alcohol is used, the majority product is the 6-hydroxyalkyl ester of 4-nitrobenzoic acid plus some bis 1,6-(4-nitrobenzoyloxy) alkane, preferably 1,6-(4-nitrobenzoyloxy) hexane. The byproduct water is removed using suitable means, preferably under vacuum during the course of the reaction.
(2) One or more suitable solvents are added to the reaction mixture, along with alkali salts of diols. Suitable solvents include, but are not necessarily limited to aprotic solvents in which nucleophilic attack is preferred. Examples include, but are not necessarily limited to dimethyl sulfoxide (DMSO), dimethyl formamide (DMF), dimethyl acetamide (DMAC), hexamethyl phosphonamide (HMPA). A preferred solvent is dimethylsulfoxide (DMSO), which is environmentally safe and relatively inexpensive. Suitable salts comprise cations effective to displace hydrogen and to produce the mono-cation salt of the alkanediol, preferably the nucleophilic monosodium salt of hexanediol, in the presence of excess alkyldiol, preferably hexanediol. Preferred salts include, but are not necessarily limited to NaH or KOBu. The salt of the alkane diol, preferably hexane diol, then displaces the activated nitro group to produce 4-(1-hydroxyalkyloxy)benzoic acid (1-hydroxyalkyl ester) and some of the dimeric compound. A preferred product is 4-(1-hydroxyhexyloxy)benzoic acid (1-hydroxyhexyl ester) and some of the dimeric compound. See N.Kornblum et al., J. Org. Chem., 41(9), 1560 (1976)
(3) The mixture from (2) is diluted with an aqueous base and heated to completely cleave the aryl-alkyl ester to produce the desired 4-(6'-hydroxyakyloxy)benzoic acid by precipitation subsequent to acidification. Suitable aqueous bases include, but are not necessarily limited to inorganic bases, a preferred base being aqueous sodium hydroxide. Suitable acids include, but are not necessarily limited to inorganic acids, a preferred acid being hydrochloric acid. In a preferred embodiment, 4-(1-hydroxyhexyloxy)benzoic acid (1-hydroxyhexyl ester) is diluted with aqueous sodium hydroxide and then acidified using hydrochloric acid to produce 4-(6'-hydroxyhexyloxy)benzoic acid. The supernatent contains sodium chloride and nitrite, which can be removed and recovered by vacuum evaporation of the solvent. In one example, the solvents evaporated are DMSO, hexanediol and water, which may be discarded. DMSO and hexanediol can be recovered from the water phase by known distillation procedures.
(4) In one example, for small scale procedures, a quantitative conversion of the 4-(6'-hydroxyaikyloxybenzoic acid to 4-(6'chloroalkyloxy) benzoyl chloride is accomplished by mixing with thionyl chloride diluted in a suitable solvent,
   preferably toluene, in the presence of pyridine base. In a preferred embodiment, 4-(6'-hydroxyhexyloxy)benzoic acid is converted to 4-(6'-chlorohexyloxy)benzoyl chloride in this manner. On a larger scale, the foregoing reaction is implemented with simple addition of SOCh and venting of the byproduct SO₂ and HCl.
(5) The highly reactive 4-(6'-chloroakyl)benzoyl chloride is coupled to a hydroquinone bearing the desired bulky group, R². In one example, 4-(6'-chlorohexyl)benzoyl chloride is mixed at room temperature with t-butyl hydroquinone in ether with pyridine, used as catalyst and as a base to take up released HCl, to form bis 1,4 [4"-(6'-hydroxyhexyloxy) benzoyloxy] t-butylphenylene. The reaction is quantitative and produces a high yield of the desired product. In addition, the bis 1,4 [4"-(6'-chloroalkloxy) benzoyloxy] R²- phenylene, preferably bis 1,4 [4"-(6'-chlorohexyloxy) benzoyloxy] t-butyl phenylene, is easily purified from the reaction mixture by crystallization. In addition, the bischlorocompound is stable and need not be stabilized against polymerization (as must bis-alkene compounds).
(6) The bischlorocompound is hydrolyzed to the platform molecule, preferably bis 1,4 [4"-(6'-chlorohexyloxy)benzoyloxy] t-butylphenylene, by simple heating in an aprotic solvent in the presence of water and potassium bromide [R.O. Hutchins and I.M. Taffer, J.Org. Chem., 48, 1360 (1983)]. Again, the reaction is quantitative with the product being purified by recrystallization. The reaction can be stopped at intermediate times to produce any desired mixture of monofunctional and difunctional alcohol molecules. In addition, the chloro-terminated molecules can be converted to the more reactive iodo-terminated species by simple exchange with Nal in acetone.
(7) The dialcohol or mixed alcohol/alkyl chloride is easily reacted with one or more polymerizable groups, preferably Michael addition reactants. In one example,
   one or more of the dialcohol ends is reacted with alkenyl chlorides to form reactive alkenyl esters, which can have any ratio of alkenyl ester, halide, or alcohol termini. The ratio can be adjusted to adjust the crosslink density and the liquid crystal transition temperatures.

### Selective Ether Cleavage

In a preferred embodiment, 4-alkoxy benzoyl chloride, preferably commercially available 4-methoxy benzoyl chloride, is reacted with a hydroquinone substituted with a desired R² group to produce the corresponding aromatic ester, bis 1,4 [4-alkoxybenzolyoxy] phenylene, preferably bis 1,4 [4-methoxybenzolyoxy] phenylene. The reaction takes place in the presence of an appropriate HCl scavenger and solvent. Suitable HCl scavengers include, but are not necessarily limited to aromatic and aliphatic amines, with a preferred HCl scavenger being pyridine. The pyridine also may be used in combination with a trialkyl amines having from about 2-4 carbon atoms, preferably triethyl amine.

In a second "step," the alkoxy group is cleaved to result in a reactive hydroxyl group while leaving the aromatic ester and thus the triaromatic mesogen structure intact. See M. Node et al., J. Org. Chem., 45, 4275 (1980)] (Figure 7a).

Node suggests that the methyl ether of bis 1,4 [4-methoxybenzolyoxy] phenylene can be selectively cleaved in the presence of a nucleophile, preferably a thiol, and a Lewis acid, such as aluminum chloride, to produce bis 1,4 [4-hydroxybenzoyloxy] phenylene. [See M. Node et al., J. Org. Chem., 45, 4275 (1980)] ("Node"). However, Node describes cleaving methyl ethers in the presence of aliphatic esters--not in the presence of aromatic esters. In initial experiments using the conditions described in Node, the more unstable aromatic esters underwent significant ester cleavage because the product complex remained in solution where additional reaction can occur.

Surprisingly, selective cleavage of the aliphatic ether in the presence of the aromatic esters was induced at low temperatures using much higher methyl ether concentrations than those described in Node. Using high concentrations of the ether and much lower concentrations of the nucleophile induced a "complex"-- containing the dihydroxy product with intact aromatic ester bonds--to precipitate from the reaction mixture at short reaction times as the complex was formed. The precipitated complex decomposed to the desired dihydroxy compound by reacting the complex with water and/or alcohol.

Suitable ethers for use in the reaction include, but are not necessarily limited to alkyl ethers, having from about 1 to about. 8, preferably 1 to 4 carbon atoms. A most preferred ether is methyl ether. Suitable nucleophiles for use in the reaction include, but are not necessarily limited to aliphatic thiols. Preferred nucleophiles are liquid alkanethiols, which typically have 11 carbon atoms or less. A most preferred nucleophile is ethane thiol.

Preferably, a minimum amount of thiol is used to dissolve aluminum chloride in the presence of the ether and a solvent. A most preferred embodiment uses at least 1 mole of thiol per mole of alkyl ether, preferably 2 moles of thiol per mole of alkyl ether. A most preferred embodiment uses 7 mmol of the methyl ether per ml of ethane thiol.

The aluminum chloride to ether ratio should be 4:1 or more, as this appears to be the ratio needed for complexation. At ratios of aluminum chloride to thiol of above 5, more of the complex will stay in the solution before saturation occurs thus resulting in aromatic ester cleavage and reduced yield. The use of less aluminum chloride will result in an incomplete cleavage of the methyl ether. The use of more aluminum chloride, in excess of 4 to 1, has shown no effect in increasing the reaction rate, but slight excesses such as 4.5 to 1 can compensate for residual water in the system.

Suitable solvents for use in the reaction are halogenated solvents, preferably chlorinated solvents, most preferably dichloromethane. The solvent concentration can range from a molar excess of from about 3 to about 7, preferably about 5 or more, in relation to the nucleophile (thiol), as needed to keep the solution in a slurry as precipitate forms. However, dichloromethane above a 5 molar excess should be added slowly as the reaction proceeds since high initial concentration of the methylene chloride will hinder the reaction rate.

The reaction preferably is started under dry conditions at about 0 °C but can be allowed to warm to room temperature (∼25 °C) as it proceeds. The reaction should not go above room temperature or ester cleavage can occur. The same procedure can be used to form diphenols with methyl, n-alkyl, halogen, and other groups substituted on the central aromatic ring.

Upon increasing methyl ether concentration to 35X the concentrations used by Node, the solubility limit of the product complex was exceeded, permitting the complex to crystallize out of the reaction mixture before the aromatic esters had an opportunity to cleave. Quantitative yields were obtained when the complex crystallized directly from the reaction mixture, effectively removing the molecule from further reaction that would form side products:

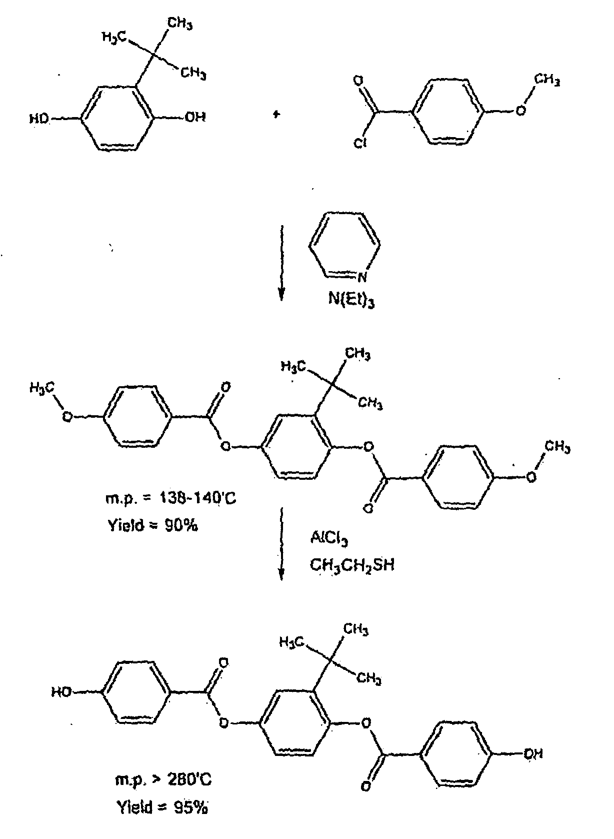

The diphenolic platform mesogens can be lengthened by reacting additional 4-methoxy benzoyl chloride with bis 1,4 [4'-methoxybenzoyloxy] t-butylphenylene to produce the dimethoxy compound with four or five aromatic rings, depending upon the reactant ratios. Cleavage with Lewis acid and thiol produces the respective elongated diphenolic platform molecules:

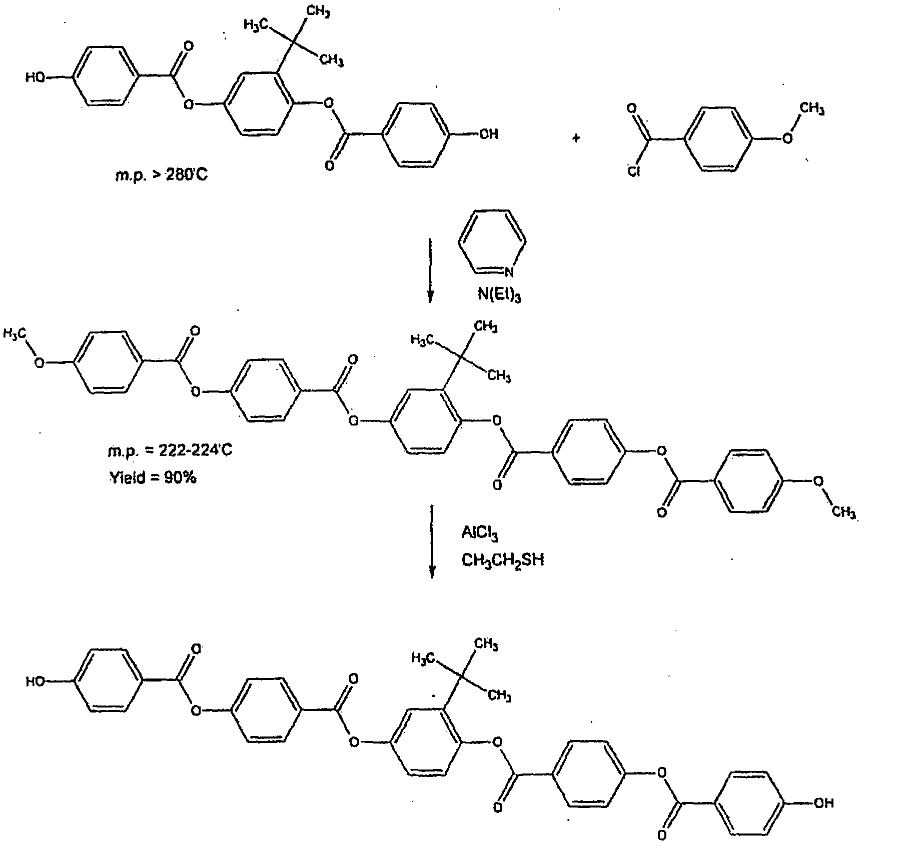

The phenolic end group(s) are esterified by acyl chlorides, thus providing a route to polymerizable mesogens. For example, reaction of C0[H,TB,H](OH)₂ with methacryloyl chloride formed the monoester which was coupled to bifunctional sebacoyl chloride to form an alkyl diester linked, methacrylate terminated liquid crystalline monomer, {C0[H,TB,H] (MeAcry)(O) }₂ (seb) with T_{n->1} of 145°C and a Tg of 25°C. This monomer had no tendency to crystallize since the synthesis yielded three different isomers with differing mutual orientation of t-butyl groups. The material does have a high viscosity, however, making it somewhat inconvenient to process at room temperature, and thus T_{g}.

### Formation of Alkoxy Terminal Functionalities

In order to produce alkoxy groups as terminal functionalities, an excess of anisoyl chloride is mixed with a desired 1,4 bis(4'-hydroxybenzoyl oxy)-R² phenylene, (preferably a t-butylphenylene) in an excess of pyridine and triethyl amine (about a 10:1 ratio) with stirring under nitrogen for several hours, preferably about 4hr. The pyridine is removed under vacuum, and the mixture is extracted into ethyl ether. Amine hydrochloride is removed by vacuum filtration and the remaining solids are washed with a suitable solvent, such as water and acetone. The product had a melting point of 222-224 °C and the structure of the molecule was confirmed by NMR to be the aromatic dimethoxy compound.

### Low Polymerization Shrinkage

The mesogens exhibit "low polymerization shrinkage" preferably no more than 3 vol.% change, more preferably no more than about 2 volume percent change. Polymerization shrinkage is measured by codissolving the monomers in dichloromethane with 0.3 wt.% camphorquinone photoinitiator, 100 ppm benzoquinone and 1 wt.% N,N' dimethylaminoethyl methacrylate activator and subsequently pumping off the solvent, all under yellow light. The monomers are then polymerized in film or droplet form in less than 1 minute by exposure to a dental curing light (Dentsply Spectrum Curing Lamp) with a significant output at 420 nm.

FTIR spectroscopy (Nicolet Magna-IR 560) is used to measure the degree of cure by observing the decrease in the 1637 cm⁻¹ alkene band vs. the aromatic internal thickness band at 1603 cm⁻¹. Thin film measurements that avoid oxygen inhibition are performed by sandwiching the monomer between polyvinylidene chloride films, which have an optical window in the wavelength region of interest. The IR spectrum of solid droplets is evaluated using a single bounce reflectance measurement. The flat bottom surface of the droplet is pressed against the germanium lens of a Spectra Tech Thunderdome attachment.

Polymerization of the monomers can be observed between transparent polyvinylidene chloride films under cross-polarized optical microscopy in the heated stage of a Nikon Optimat microscope. Little change in the local birefringence and thus local orientation is noted upon polymerization at room temperature or upon heating to 180° C.

### Fracture Toughness

Compact tension samples (ASTM E399) with known edge crack length are fabricated by photocuring the monomer with initiator and activator in silicone molds. After polishing the surface with 600 grit polishing agent and soaking in physiologic saline at 37 °C for 24 hours the samples were tested at room temperature under displacement control at 1mm/min until failure.

The fracture toughness of the crosslinked, amorphous glass suitable is about 0.4 MPa-m^{1/2}, preferably about 0.5 MPa-m^{1/2}, which is identical to that found for photocured, isotropic dimethacrylate based resins such as GTE resin.

### Fillers

Considerable amounts of soluble impurity can be added to the polymerizable mesogens, or a mixture comprising the polymerizable mesogens, without changing the T_{nematic->isotropic} transition temperature of the polymerizable mesogens. Thus, a high volume fraction of filler can be added to the polymerizable mesogens and still form a composite that maintains desirable, low viscosity flow and low polymerization shrinkage characteristics at temperatures of curing. Commercial products add up to about 70-80 wt% filler. A preferred embodiment uses about 30 wt.% filler.

A variety of fillers may be used. A preferred filler is amphoteric nano-sized metal oxide particles having a diameter in nanometers which is sufficiently small to provide transparency effective for photopolymerization but sufficiently large to provide effective fracture toughness after photopolymerization. Substantially any "metal" capable of forming an amphoteric metal oxide may be used to form the metal oxide particles. Suitable metallic elements include, but are not necessarily limited to niobium, indium, titanium, zinc, zirconium, tin, cerium, hafnium, tantalum, tungsten, and bismuth. Also suitable in place of the metal in the oxide is the semi-metallic compound, silicon. As used herein, unless otherwise indicated, the term "metal oxide" is defined to include silicon, and the word "metal," when used to refer to the metal oxide is intended to also refer to silicon.

The metal oxides may be made of a single metal, or may be a combination of metals, alone or combined with other impurities or "alloying" elements, including, but not necessarily limited to aluminum, phosphorus, gallium, germanium, barium, strontium, yttrium, antimony, and cesium.

A monomeric liquid crystal (LC) containing a high volume fraction of filler nanoparticles is a highly constrained system. As a result, at least for some monomeric species, both smectic and crystalline transitions should be suppressed. The consequent widening of the stability range of nematic mesophase should permit the composite to polymerize at much lower temperatures than in unfilled systems, resulting in lower polymerization shrinkage.

The metal oxide nanoparticles may be prepared using any known methods, such as "sol-gel" techniques, direct hydrolysis of metal alkoxides by water addition, forced hydrolysis of relatively low-cost metal salts, or non-hydrolytic reactions of metal alkoxides with metal halide salts. Examples of such procedures are shown in the following references, each of which is incorporated herein by reference: W. Stöber and A. Fink, J. of Colloid and Interface Science, v. 26, 62-69 (1968); M.Z.-C. Hu, M.T. Harris, and C.H. Byers, J. of Colloid and Interface Science, v. 198, 87-99 (1988); M. Ocana and E. Matijevic, J. of Materials Research, v. 5(5), 1083-1491 (1990); L. Lerot, F. LeGrand, P. de Bruycker, J. of Materials Science, v. 26, 2353-2358 (1991); H. Kumazawa, Y. Hori, and E. Sada, The Chemical Eng'g. Journal, v. 51, 129-133 (1993); S. K. Saha and P. Pramanik, J. of Non-Crystalline Solids, v. 159, 31-37 (1993); M. Andrianainarivelo, R. Corriu, D. Leclercq, P.H. Mutin, and A. Vioux, J. of Materials Chemistry, v. 6(10), 1665-1671 (1996); F. Garbassi, L. Balducci, R. Ungarelli, J. of Non-Crystalline Solids, v. 223, 190-199 (1998); J. Spatz, S. Mössmer, M. Mo[umlaut]ller, M. Kocher, D. Neher, and G. Wegner, Advanced Materials, v. 10(6), 473-475 (1998); R. F. de Farias, and C. Airoldi, J. of Colloid and Interface Science, v. 220, 255-259 (1999); T. J. Trentler, T. E. Denler, J. F. Bertone, A. Agrawal, and V.L. Colvin, J. of the Am. Chemical Soc., v. 121, 1613-1614 (1999); Z. Zhan and H.C. Zheng, J. of Non-Crystalline Solids, v. 243, 26-38 (1999); M. Lade, H. Mays, J. Schmidt, R. Willumeit, and R. Schomäcker, Colloids and Surfaces A: Physiochemical and Eng'g Aspects, v. 163, 3-15 (2000); and the procedure described in "Sol-gel processing with inorganic metal salt precursors," authored by "Michael" Zhong Cheng Hu, licensable via Oak Ridge National Laboratory under ORNL control number ERID 0456.

The application will be better understood with reference to the following examples, which are illustrative only, with the examples being presented purely as background art, useful for understanding the invention.

### Examole 1

### Synthesis of 4-nitrophenylenecarbonyloxy 6'-hexane-1'-ol

60 g 4-nitrobenzoic acid (0.4 mole) was dissolved in 250 ml (2.07 mole) dry hexandiol that had been fused in the reaction vessel at 165 °C, 1 ml tetrabutyltitanate catalyst was added, and the mixture was stirred for 3 hours at 135 °C before cooling to 95 °C where stirring was continued under dynamic vacuum for two days to remove the water of condensation.

The solution was extracted with 1 liter diethyl ether, centrifuged or filtered to remove the catalyst, and then washed two times with 500 ml 5% NaHCO₃ to remove unreacted acid and excess diol. After the ether was vacuum evaporated, the residue was dissolved in 150 ml boiling ethanol to which 75 ml water was added. Upon cooling to room temperature bis 1,6-(4 nitrophenylene carbonyloxy)hexane precipitated as 7.61 grams of a yellow powder (Tₘ = 112°C).

The remaining solution was evaporated and redissolved in 150 ml diethyl ether to which was added 75 ml hexane. After crystallization at -20 °C 4-nitrophenylene 4-carbonyloxy 6'-hexane-1'-ol (86.7 grams) was isolated (Tₘ=32-35 °C). NMR indicated that both of these products were greater than 98% purity.

### Example 2

### Syntheses of 4-(6-hydroxyhexyloxy)phenylenecarbonyloxy 6'-hexane 1'-ol

20 ml (0.166 mole) of dry, molten hexandiol was transferred to a flask with an attached short path distillation unit. 200 ml dry dimethylsulfoxide (DMSO) and then 40 ml of 1 M KOBu^{t} was then added to the diol and stirred 45 minutes at room temperature. The Bu^{t}OH and a small amount of DMSO were distilled off under vacuum between 25-50°C over one hour. 8ml (0.04 mole) of dry 4-nitrophenylenecarbonyloxy 6'-hexane-1'-ol was added producing a bright blue color that converted to a yellow coloration after 2 hours.

After stirring overnight, the DMSO and excess hexanediol was removed by vacuum distillation at 90 °C, whereupon the residue was taken up in 200 ml diethyl ether which was washed twice with 200 ml 5% NaHCO₃ and dried with MgSO₄. After the ether was distilled away, the solid was dissolved in a minimum amount of boiling ethanol and crystallized at -20°C. A 75-90% yield of the desired white product was obtained (Tₘ =30-33°C).

### Example 3

### Synthesis of 4-[6-hydroxyhexyloxy] benzoic acid

1.2 g (0.0037 mole) 4-(6-hydroxyhexyloxy)phenylenecarboxyoxy 6-hexane 1'-ol was heated for 8 hours at 90 °C in a solution of 0.29 g (0.0074 mole) NaOH in 4 ml water. 20 ml of water was added to the clear solution and 0.3 ml of concentrated HCl added to precipitate the acid at pH=3-5. The white solid was filtered off and dried under vacuum to produce a quantitative yield of the substituted benzoic acid (Tₘ= 117°C).

### Example 4

### Synthesis of 4(6'-chlorohexyloxy) benzoyl chloride

A three times molar excess of thionyl chloride (55ml) in toluene (300ml) was dropwise added over 20 minutes to 4-(6'-hydroxyhexyloxy)benzoic acid (60g, 0.252 mole) suspended in toluene (600ml) with a stoichiometric amount of pyridine (42 ml) at 0 °C. The suspension was continuously stirred for another 8 hours at room temperature, whereupon the toluene and excess thionyl chloride were distilled off at 70-100 °C with a slight nitrogen flow. The remaining slush of the pyridine hydrochloride and product was extracted with 11 boiling hexane and mixed with 5 g basic alumina and 5g neutral silica and filtered hot. A 90% yield of a very light yellow 4-(6'-chlorohexyloxy)benzoyl chloride liquid was obtained after evaporation of the hexane (Tₘ <20°C).

### Example 5

### Synthesis of bis 1,4 [4"-(6'-chlorohexyloxy)benzoyloxy] t-butylphenylene

65g of 4-(6'-chlorohexyoxy)benzoyl chloride (0.23 mole) was added to 16.75 g (0.1 mole) of t-butyl hydroquinone dissolved in 800 ml dry diethyl ether. 10 ml pyridine and 32 ml triethylamine were then added to this mixture. After stirring for 20 hours, the ether was filtered and washed two times with 200 mt 0.1N HCl and 200 ml saturated NaCl solution. The ether solution was then mixed with 10g basic alumina to remove unreacted acid and 10 g neutral silica to flocculate the suspension and dried over magnesium sulfate. The product starts to crystallize from the ether when the solution is reduced by half. After continued crystallization at -20 °C overnight 63 g of product melting at 95-100 °C could be obtained. Another crop of crystals was obtained by further reducing the solution and crystallizing at -20°C over one week. NMR purity was >99%.

### Example 6

### Synthesis of bis 1,4 [4"-(6'-iodohexyloxy)benzoyloxy] t-butylphenylene

1.15 g (0.0016 mole) bis 1,4 [4"-(6'-chlorohexyloxy)benzoyloxy] t-butylphenylene dissolved in 20 ml acetone was boiled under nitrogen with 8.0 g NaI in 20 ml acetone for 20 hours. A quantitative yield of bis 1,4 [4"-(6'-iodohexyloxy)benzoyloxy] t-butylphenylene was obtained. The material melted at 76 °C and was >99% pure by NMR.

### Example 7

### Synthesis of bis 1,4 [4"-(6'-hydroxyhexyloxy)benzoyloxy] t-butylphenylene

36 g of bis 1,4 [4"-(6'-chlorohexyloxy)benzoyloxy] t-butylphenylene was dissolved in 750 ml of n-methypyrrolidinone (NMP) in a single neck flask. 15g KBr and 120 ml water were then added. The flask was then wired shut with a suba seal, and the solution was heated to 120°C for 24 hours. Upon cooling, the solution was quenched into 1500 ml water and extracted with 250 ml methylene chloride. After evaporation of the methylene chloride, the solid was extracted with 11 of ether and washed with 11 water and dried with MgSO₄. The solution was concentrated and crystallized at -20 °C for 3 days to yield 17 g of white product melting at 80 °C. Additional product crystallized from the solution after several weeks. NMR purity was >99%.

Stopping the above reaction at intermediate times yielded mixtures of di-OH terminated, and asymmetric monochloro, monohydroxy compounds.

### Example 8

### Synthesis of bis 1,4 [4"-(6'-methacryloyloxyhexyloxy)benzoyloxy] t-butylphenylene

10 g (0.0165 mole) bis 1,4 [4"-(6'-hydroxyhexyloxy)benzoyloxy] t-butylphenylene was dissolved in 200 ml dry methylene chloride containing 100 ppm benzoquinone (free radical quencher). After cooling the above solution to 0 °C 3.2 ml (0.035 mole) distilled methacryloyl chloride was then added along with 3 ml (0.037 mole) pyridine and the solution was stirred for 24 hours in a sealed flask making no attempt to remove air from the solvent.

The solvent was vacuum evaporated and the resultant solid taken up in 250 ml ether and washed with 250 ml 0.1N H Cl and 250 ml saturated NaCl. After drying with MgSO₄ and filtering, the solvent was evaporated to yield 10 g of the desired product as a hematic liquid, which was >98% pure by NMR. This material could be crystallized from diethyl ether at -20 °C to form a white crystalline solid melting at 57 °C.

### Example 9

### Synthesis of bis 1,4 [4"-(6'-Z-hexyloxy)benzyloxy] t-butylphenylene, Z=46mole%OH, 54mol% metha'cyloxy

10 g (0.0165 mole) of bis 1,4 [4"-(6'-hydroxyhexyloxy)benzoyloxy] t-butylphenylene was dissolved in 200 ml dry methylene chloride containing 100 ppm benzoquinone (free radical quencher). After cooling the above solution to 0 °C 1.75 ml (0.018 mole) distilled methacryloyl chloride was then added along with 1.5 ml (0.018 mole) pyridine, and the solution was stirred for 24 hours in a sealed flask making no attempt to remove air from the solvent.

The solvent was vacuum-evaporated and the resultant solid taken up in 250 ml ether and washed with 250 ml 0.1N HCl and 250 ml saturated NaCl. After drying with MgSO₄ and filtering, the solvent was evaporated to yield 10 g of the desired product as a nematic liquid, which was 54 mole% methacryloxy and 46 mole % hydroxyterminated by NMR. This material could be not be crystallized even after prolonged storage at -20 °C.

Liquid crystal monomers containing a variation in the OH substitution by functional groups could be made by adapting the above synthesis with an appropriate amount of methacryloyl or acryloyl chloride.

### Example 10

### Synthesis of bis 1,4 [4"-(6'-cinnamoyloxyhexyloxy)benzoyloxy] t-butylphenylene

5 g (0.0825 mole) of bis 1,4 [4"-(6'-hydroxyhexyloxy)benzoyloxy] t-butylphenylene was dissolved in 100 ml dry methylene chloride containing 100 ppm benzoquinone (free radical quencher). After cooling the above solution to 0 °C, 3.0 g (0.018mole) cinnamoyl chloride was then added along with 1.4 ml (0.017 mole) pyridine, and the solution was stirred for 24 hours in a sealed flask making no attempt to remove air from the solvent.

The solvent was vacuum-evaporated and the resultant solid taken up in 100 ml ether and washed with 100 ml 0.1N HCl and 250 ml saturated NaCl. After drying with MgSO₄ and filtering, the solvent was evaporated to yield 5 g of the desired product which was >98% pure by NMR. This material could be crystallized from diethyl ether at -20 °C to form a white crystalline solid melting at 70 °C.

### Example 11

### Synthesis of bis 1,4 [4"-(6'-acetoxyoxyhexyloxy)benzoyloxy] t-butylphenylene

I g (0.0165 mole) of bis 1,4 [4"-(6'-hydroxyhexyloxy)benzoyloxy] t-butylphenylene was dissolved in 20 ml dry methylene chloride, After cooling the above solution to 0°C, 0.27 ml (0.0037 mole) acetyl chloride was then added along with 0.3 ml pyridine, and the solution was stirred for 24 hours in a sealed flask.

The solvent was vacuum-evaporated and the resultant solid taken up in 20 ml ether and washed with 20 ml 0.1N HCl and 250 ml saturated NaCl. After drying with MgSO₄ and filtering, the solvent was evaporated to yield the product quantitatively at >98% purity by NMR. This material could be crystallized from diethyl ether at -20 °C to form a white crystalline solid melting at 82 °C.

### Example 12

### Synthesis of 1,4 Bis(4'-methoxybenzoyloxy)t-butylphenylene

Anisoyl chloride (4.93 g, 0.029 mole), t-butyl hydroquinone (2.00 g, 0.012 mole) in pyridine (50 ml) and triethyl amine (3.2 ml) were stirred under nitrogen for 4 hours with the mixture eventually becoming dark orange/red. The pyridine was removed under vacuum and the mixture was precipitated into ethyl ether (500 ml). Amine hydrochloride precipitated out of solution and was removed by vacuum filtration. The ether was evaporated and the slightly yellow crystals were dissolved in chloroform and extracted with slightly acidified water. The color of the crystals was then removed by stirring over basic alumina and the crystals were then purified by recrystallization in isopropanol. 4.8 grams of material was collected (88% yield) with a melting point of 138-140 °C. The structure of the molecule was confirmed by NMR.

### Example 13

### Synthesis of 1,4 Bis(4'-hydroxybenzoyloxy) t-butylphenylene

1,4 Bis(4-methoxybenzoyloxy) t-butylphenylene (0.5 g., 0.00115 mole) and aluminum chloride (1.23 g., 0.00921 mole) were added to ethane thiol (2.5 ml) and dichloromethane (2.5 ml) to form a slightly yellow solution. This mixture was stirred for 1 hour and a white solid precipitated out of solution during this time. The mixture was precipitated into 200 ml of water and extracted with ethyl ether. The ether was evaporated and 0.432 grams were recovered, (92% yield). The melting point was not determined, but was found in be in excess of 280 °C.

### Example14

### Synthesis of 1,4 Bis(4"-(4'-methoxybenzoyloxy)benzoyloxy)t-butylphenylene

The dark orange solution of anisoyl chloride (0.357 g, 2.096 mmole), 1,4 Bis(4'-methoxybenzoyloxy) t-butylphenylene (0.355 g, 0.873 mmole) in pyridine (25 ml) and triethyl amine (0.5 ml) were stirred under nitrogen for 4hr. The pyridine was removed under vacuum, and the mixture was extracted into ethyl ether (200 ml). Amine hydrochloride and the product were insoluble and were removed by vacuum filtration. The amine hydrochloride was removed by washing the solids with water and acetone. The product had a melting point of 222-224 °C and the structure of the molecule was confirmed by NMR.

### Example 15

### Synthesis of 1,4 Bis(4'-methacryloylbenzoyloxy) t-butyphenylene and 1-(hydroxybenzoyloxy),4-(4'-methacryloylbenzoyl) t-butylphenylene

0.2 g (4.92 X 10⁻⁴ mole) 1,4 bis(4'-hydroxybenzoyloxy) t-butylphenylene was dissolved in 1 ml pyridine containing 10 ppm benzophenone, and to this was slowly added 0.026 ml (2.46 X 10 ⁻⁴ mole) methacryloyl chloride dissolved in 2 ml methylene chloride. After stirring for 12 hours at room temperature, the methylene chloride was pumped off and the remaining pyridine solution was diluted into 0.1 N HCl to neutralize the pyridine and precipitate the product. After washing the precipitate with water and drying under vacuum, the precipitate was taken up into ether and dried with MgSO₄. After ether evaporation, the suspension was taken up into 3 ml methylene chloride in which the starting diphenol was insoluble. After filtering away the diphenol, the monomethacrylate (Tₘ = 230 °C) was crystallized from the remaining solution at room temperature by the addition of 3ml hexane. The remaining clear solution contained mainly the dimethacrylate in very small amounts (Tₘ = 142°C).

### Example 16

### Synthesis of bis-(4-{2-tert-butyl-4-[4-(2-methyl-acryloyloxy)-benzoyloxy]-phenoxycarbonyl}-phenyl) ester {C0[H,TB,H] (MeAcry)(O) }₂

In order to make decanedioic acid bis-(4-{2-tert-butyl-4-[4-(2-methyl-acryloyloxy)-benzoyloxy]-phenoxycarbonyl}-phenyl) ester {C0[H,TB,H] (MeAcry)(O) }₂ (seb), 0.95g, 1.95mmole of 1-(hydroxybenzoyloxy),4-(4'-methacryloylbenzoyloxy) t-butylphenylene was dissolved in 10 ml dry pyridine under dry nitrogen and then diluted with 20 ml dry methylene chloride. 0.233g sebacoyl chloride (0.975mmol) was dissolved in 10 ml dry methylene chloride containing 10ppm benzoquinone inhibitor and added slowly with syringe through a suba seal into the first solution with stirring. After 29 hours at room temperature a small amount of precipitate was seen and the methylene chloride was pumped off and 0.01g paradimethylaminopyridine was added as a catalyst to continue the reaction.

After another 24 hours at room temperature, some unconverted phenol was still observed by TLC and 0.5ml methacryloyl chloride was dissolved in 10 ml dry methylene chloride and added to the reaction mixture to react any unconverted starting material to the dimethacrylate. After 3 hours the phenol had been completely converted and methylene chloride was removed under vacuum.

100ml of water containing 7.5ml concentrated HCl was added to the flask with stirring and stirred for four hours to remove the pyridine as the hydrochloride salt (pH=4). The water layer could be poured from the white layer which stuck to the walls of the vessel. After washing once more with deionized water, 100ml methylene chloride was added to dissolve the solid and the resulting organic phase was transferred to a separatory funnel and washed twice with 100ml brine saturated water and dried with magnesium sulfate. One gram each of silica and basic alumina were added to absorb any remaining methacrylic acid or carboxylic acid terminated products.

After standing for 8 hours the methylene chloride solution was filtered and added to 500ml of stirred hexane. After 8 hours the pure precipitated product was collected; the supematent contained methacrylated starting material.

The white precipitate eluted in 80/20 ether/hexane on silica as a major spot and a very faint following spot. NMR revealed about 95% purity of the desired product (30% yield) with the rest being a methoxy terminated product which was carried over from the diphenol starting material. Solutions could be cast into a translucent, nematic glass at room temperature which gradually softened upon heating.

### Example 17

### Synthesis of Decanedioic acid bis-(4-{2-tert-butyl-4-[4-(hydroxy)-benzoyloxy]-phenoxycarbonyl}-phenyl) ester

18.25g, (44.9mmole) of 1,4 bis(4'-hydroxybenzoyloxy) t-butylphenylene was dissolved in 120 ml dry pyridine under dry nitrogen and then diluted with 100 ml dry methylene chloride. 1.34g sebacoyl chloride (5.60mmol) was dissolved in 20 ml dry methylene chloride and added slowly with syringe through a suba seal into the first solution with stirring. After 24 hours at room temperature a small amount of precipitate was seen and the methylene chloride and pyridine were pumped off

300ml of water containing 7.5ml concentrated HCl was added to the flask with stirring and stirred for four hours to remove the pyridine as the hydrochloride salt (pH=4). The water was filtered off from the white precipitate that formed in the vessel. 200ml of acetone was added to dissolve the mixture which was then stirred with 3 grams of magnesium sulfate to remove any remaining water, after which the solution was dried down. 200ml methylene chloride (DCM) was added to dissolve the solid. After 24 hours at room temperature the unreacted 1,4 bis(4'-hydroxybenoyloxy) t-butylphenylene crystallized out of solution as a white precipitate. The solution was then placed in the freezer overnight and decanedioic acid bis-(4-{2-tert-butyl-4-[4-(hydroxy)-benzoyloxy]-phenoxycarbonyl}-phenyl) ester precipitated out of solution.

The white precipitate eluted in 90/10 DCM/acetone on silica as a major spot and a very faint spots resulting from higher order polymerization. The product had a high NMR purity (>95%)..

### Example 18

### Synthesis of Decanedioic acid bis-(4-{2-tert-butyl-4-[4-(2-methyl-acryloyloxy)-benzoyloxy]-phenoxycarbonyl}-phenyl) ester

0.85g, (0.868mmole) of decanedioic acid bis-(4-{2-tert-butyl-4-[4-(hydroxy)-benzoyloxy]-phenoxycarbonyl}-phenyl) ester was dissolved in 20ml dry pyridine under dry nitrogen and then diluted with 20ml dry methylene chloride. 0.118g methacrylol chloride (1.13mmol) was dissolved in 10 ml dry methylene chloride containing 10ppm benzoquinone inhibitor and added slowly with syringe through a suba seal into the first solution with stirring. After 24 hours at room temperature a small amount of precipitate was seen and the methylene chloride and pyridine were pumped off.

100ml of water containing 1.0ml concentrated HCl was added to the flask with stirring and stirred for two hours to remove the pyridine as the hydrochloride salt (pH=4). The water layer could be poured from the white layer, which stuck to the walls of the vessel. After washing once more with deionized water. 50ml methylene chloride was added to dissolve the solid and the resulting organic phase was transferred to a separatory funnel and washed twice with 100ml brine saturated water and dried with magnesium sulfate. One gram each of silica and basic alumina were added to absorb any remaining methacrylic acid or carboxylic acid terminated products. NMR revealed that the product was the desired dialkene terminated monomer.

## Claims

1. Mesogens having the following general formula: 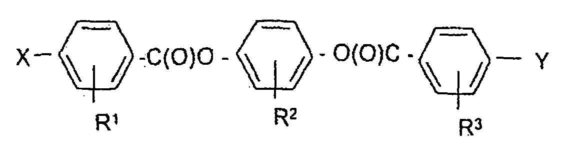 wherein
X is a polymerizable group and Y is an amino group and R² is a bulky organic group having a bulk greater than R¹ and R³; or
at least one of X or Y has the following general structure 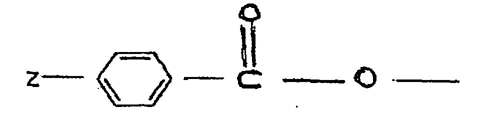 wherein Z is selected from the group consisting of a terminal functionality and a polymerizable group and R² is a bulky organic group having a bulk greater than R¹ and R³.

2. The mesogens of claim 1 wherein said polymerizable groups are selected from the group comprising a polymerizable unsaturated carbon-carbon bond.

3. The mesogens of claim 1 wherein said polymerizable groups are groups adapted to be polymerized by either free radical polymerization or by Michael addition.

4. The mesogens of claim 1 wherein said polymerizable groups are selected from the group consisting of alkenyl ester groups comprising a polymerizable unsaturated carbon-carbon bond wherein said alkenyl groups have from 2 to 12 carbon atoms.

5. The mesogens of claim 1 wherein said polymerizable groups are selected from the group consisting of acryloyloxy alkoxy groups and methacryloyloxy alkoxy groups comprising alkyl groups having from 2 to 12 carbon atoms.

6. The mesogens of claim 5 wherein said alkyl group has from 2 to 9 carbon atoms.

7. The mesogens of claim 5 wherein said alkyl group has from 2 to 6 carbon atoms.

8. The mesogens of claim 5 wherein said alkyloxy group comprises an alkyl moiety having 6 carbon atoms.

9. The mesogens of claim 1 wherein said polymerizable groups are selected from the group consisting of acryloyloxy groups and methacryloyloxy groups.

10. The mesogens of any of claims 1-9 wherein R² is selected from the group consisting of alkyl groups having from about 1 to 6 carbon atoms and aryl groups.

11. The mesogens of any of claims 1-9 wherein R² is selected from the group consisting of methyl groups, t-butyl groups, isopropyl groups, secondary butyl groups, and phenyl groups.

12. The mesogens of any of claims 1-9 wherein R² is selected from the group consisting of a methyl group and a t-butyl group.

13. The mesogens of any of claims 1-9 wherein R and R³ are selected from the group consisting of hydrogen and a methyl group.

14. The mesogens of any of claims 1-3 and 9-13 wherein said polymerizable groups are selected from the group consisting of cinnamoyloxy groups, acryloyloxy groups, methacryloyloxy groups, and thioalkyloxy groups, acryloyloxy alkoxy groups, and methacryloyloxy alkyloxy groups comprising an alkyl moiety having from about 2 to about 12 carbon atoms, said alkyl moiety comprising CH₂ groups, wherein one or more of said CH₂ groups independently can be substituted by oxygen, sulfur, or an ester group; provided that at least 2 carbon atoms separate said oxygen or said ester group.

15. The mesogens of claim 14 wherein said alkyl moiety has from 2 to 9 carbon atoms.

16. The mesogens of claim 14 wherein said alkyl moiety has from 2 to 6 carbon atoms.

17. The mesogens of claim 14 wherein said alkyl moiety has 6 carbon atoms.

18. The mesogens of any of claims 1-3 and 10-13, wherein X comprises a cinnamoyloxy group.

19. A composition comprising the mesogens of any of claims 1-18 wherein X is a polymerizable group, and a proportion of from about 3 to about 50 mole% of X comprises a crystallization retardant, said proportion and said bulky organic group being effective to maintain said nematic state and to produce said effective rheology and workability at room temperature, said crystallization retardant comprising at least one halogen atom selected from the group consisting of chlorine, bromine, and iodine.

20. The composition of claim 19 wherein said proportion is from about 10 to about 15 mole%.

21. The mesogens or compositions of any of claims 1-20 wherein at least one of X or Y comprises a bridging agent.

22. The mesogens or compositions of claim 21 wherein said bridging agent comprises a dicarboxoyl group comprising from about 4 to about 12 carbon atoms.

23. The mesogens or compositions of claim 21 wherein said bridging agent comprises an oligodialkylsiloxane comprising alkyl groups comprising from about 1 to about 3 carbon atoms.

24. The mesogens or compositions of any of claims 1-23 wherein X has the following general structure: 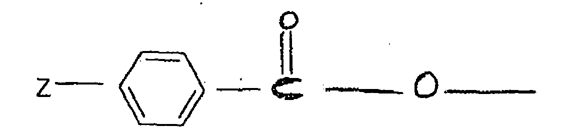 wherein Z is selected from the group consisting of a terminal functionality and a polymerizable group.

25. The mesogens or compositions of any of claims 1-24 wherein R¹ and R³ are hydrogen.

26. A composition comprising the mesogen or compositions of any of claims 1 to 25.

## Patentansprüche

1. Mesogene mit der folgenden allgemeinen Formel: 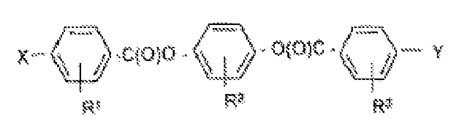 wobei
X eine polymerisierbare Gruppe und Y eine Aminogruppe ist und R² eine massige organische Gruppe mit einer Masse größer als R¹ und R³; oder
mindestens entweder X oder Y die folgende allgemeine Struktur hat: 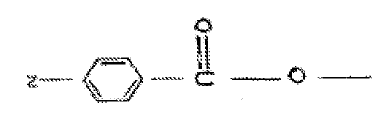 wobei Z aus der Gruppe gewählt ist, die aus einer terminalen Funktionalität und einer polymerisierbaren Gruppe besteht, und R² eine massige organische Gruppe mit einer Masse größer als R¹ und R³ ist.

2. Mesogene nach Anspruch 1, wobei die polymerisierbaren Gruppen aus der Gruppe ausgewählt sind, die eine polymerisierbare ungesättigte Kohlenstoff-Kohlenstoff-Bindung enthält.

3. Mesogene nach Anspruch 1, wobei die polymerisierbaren Gruppen solche Gruppen sind, die sich dafür eignen, mittels Polymerisation mit freien Radikalen oder durch Michael-Addition polymerisiert zu werden.

4. Mesogene nach Anspruch 1, wobei die polymerisierbaren Gruppen ausgewählt sind aus der Gruppe, die aus Alkenyl-Ester-Gruppen besteht, welche eine polymerisierbare ungesättigte Kohlenstoff-Kohlenstoff-Bindung umfassen, wobei die Alkenyl-Gruppen von 2 bis 12 Kohlenstoffatome aufweisen.

5. Mesogene nach Anspruch 1, wobei die polymerisierbaren Gruppen aus der Gruppe ausgewählt sind, die aus Acryloyloxy-Alkoxy-Gruppen und Methacryloyloxy-Alkoxy-Gruppen besteht, welche Alkyl-Gruppen mit 2 bis 12 Kohlenstoffatomen umfassen.

6. Mesogene nach Anspruch 5, wobei die Alkyl-Gruppe 2 bis 9 Kohlenstoffatome aufweist.

7. Mesogene nach Anspruch 5, wobei die Alkyl-Gruppe 2 bis 6 Kohlenstoffatome aufweist.

8. Mesogene nach Anspruch 5, wobei die Alkyloxy-Crruppe eine Alkyl-Kette mit 6 Kohlenstoffatomen umfasst.

9. Mesogene nach Anspruch 1, wobei die polymerisierbaren Gruppen aus der Gruppe ausgewählt sind, die aus Acryloyloxy-Gruppen und Methacryloyloxy-Crruppen besteht.

10. Mesogene nach einem der Ansprüche 1-9, wobei R² aus der Gruppe ausgewählt ist, die aus Alkyl-Gruppen mit etwa 1 bis 6 Kohlenstoffatomen und Aryl-Gruppen besteht.

11. Mesogene nach einem der Ansprüche 1-9, wobei R² aus der Gruppe ausgewählt ist, die aus Methyl-Gruppen, T-Butyl-Gruppen, Isopropyl-Gruppen, sekundären Butyl-Gruppen und Phenyl-Gruppen besteht.

12. Mesogene nach einem der Ansprüche 1-9, wobei R² aus der Gruppe ausgewählt ist, die aus einer Methyl-Gruppe und einer T-Butyl-Crruppe besteht.

13. Mesogene nach einem der Ansprüche 1-9, wobei R¹ und R³ aus der Gruppe ausgewählt sind, die aus Wasserstoff und einer Methylgruppe besteht.

14. Mesogene nach einem der Ansprüche 1-3 und 9-13, wobei die polymerisierbaren Gruppen ausgewählt sind aus der Gruppe, die aus Cinnamoyloxy-Crruppen, Acryloyloxy-Gruppen, Methacryloyloxy-Crruppen und Thioalkyloxy-Gruppen, Acryloyloxy-Alkoxy-Gruppen und Methacryloyloxy-Alkyloxy-Crruppen besteht, welche eine Alkyl-Kette mit etwa 2 bis etwa 12 Kohlenstoffatomen umfassen, wobei die Alkyl-Kette CH₂-Gruppen umfasst, wobei eine oder mehrere der CH₂-Gruppen unabhängig durch Sauerstoff, Schwefel oder eine Ester-Gruppe ersetzt werden kann; vorausgesetzt, dass mindestens 2 Kohlenstoffatome den Sauerstoff bzw. die Ester-Gruppe trennen.

15. Mesogene nach Anspruch 14, wobei die Alkyl-Kette 2 bis 9 Kohlenstoffatome aufweist.

16. Mesogene nach Anspruch 14, wobei die Alkyl-Kette 2 bis 6 Kohlenstoffatome aufweist.

17. Mesogene nach Anspruch 14, wobei die Alkyl-Kette 6 Kohlenstoffatome aufweist.

18. Mesogene nach einem der Ansprüche 1-3 und 10-13, wobei X eine Cinnamoyloxy-Gruppe umfasst.

19. Zusammensetzung, umfassend die Mesogene nach einem der Ansprüche 1-18, wobei X eine polymerisierbare Gruppe ist, und ein Anteil von etwa 3 bis etwa 50 Mol% von X einen Kristallisationsverzögerer enthält, wobei dieser Anteil und die massige organische Gruppe wirksam sind, um den nematischen Zustand zu erhalten und die effektive Rheologie und Verarbeitbarkeit bei Raumtemperatur zu erzeugen, wobei der Kristallisationsverzögerer mindestens ein Halogenatom umfasst, das aus der Gruppe ausgewählt ist, die aus Chlor, Brom und Iod besteht.

20. Zusammensetzung nach Anspruch 19, wobei der Anteil von etwa 10 bis etwa 15 Mol% beträgt.

21. Mesogene oder Zusammensetzungen nach einem der Ansprüche 1-20, wobei mindestens entweder X oder Y einen Brückenbildner umfasst.

22. Mesogene oder Zusammensetzungen nach Anspruch 21, wobei der Brückenbildner eine Dicarboxoyl-Gruppe umfasst, die etwa 4 bis etwa 12 Kohlenstoffatome umfasst.

23. Mesogene oder Zusammensetzungen nach Anspruch 21, wobei der Brückenbildner ein Oligodialkylsiloxan umfasst, das Alkyl-Gruppen beinhaltet, die etwa 1 bis etwa 3 Kohlenstoffatome umfassen.

24. Mesogene oder Zusammensetzungen nach einem der Ansprüche 1-23, wobei X die folgende allgemeine Struktur hat: 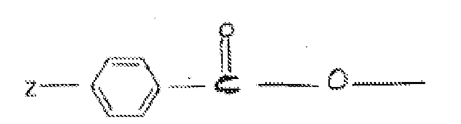 wobei Z aus der Gruppe ausgewählt ist, die aus einer terminalen Funktionalität und einer polymerisierbaren Gruppe besteht.

25. Mesogene oder Zusammensetzungen nach einem der Ansprüche 1-24, wobei R¹ und R² Wasserstoff sind.

26. Zusammensetzung, die das Mesogen und Zusammensetzungen nach einem der Ansprüche 1 bis 25 umfasst.

## Revendications

1. Mésogènes ayant la formule générale suivante : 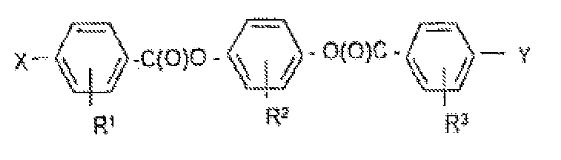 dans laquelle
X est un groupe polymérisable et Y est un groupe amino et R² est un groupe organique volumineux ayant un volume supérieur à R¹ et R³ ; ou
au moins un parmi X ou Y a la structure générale suivante 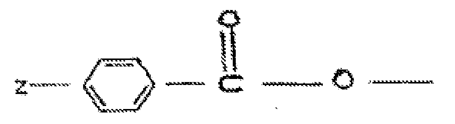 dans laquelle Z est sélectionné parmi le groupe constitué d'une fonctionnalité terminale et d'un groupe polymérisable et R² est un groupe organique volumineux ayant un volume supérieur à R¹ et R³.

2. Mésogènes selon la revendication 1, dans lesquels lesdits groupes polymérisables sont sélectionnés parmi le groupe comprenant une liaison carbone-carbone non saturée polymérisable.

3. Mésogènes selon la revendication 1, dans lesquels lesdits groupes polymérisables sont des groupes adaptés pour être polymérisés soit par une polymérisation radicalaire, soit par une addition de Michael.

4. Mésogènes selon la revendication 1, dans lesquels lesdits groupes polymérisables sont sélectionnés parmi le groupe constitué de groupes esters d'alcényles comprenant une liaison carbone-carbone non saturée polymérisable dans lesquels lesdits groupes alcényles ont de 2 à 12 atomes de carbone.

5. Mésogènes selon la revendication 1, dans lesquels lesdits groupes polymérisables sont sélectionnés parmi le groupe constitué de groupes alkoxy acryloyloxy et de groupes alkoxy méthacryloyloxy comprenant des groupes alkyles ayant de 2 à 12 atomes de carbone.

6. Mésogènes selon la revendication 5, dans lesquels ledit groupe alkyle a de 2 à 9 atomes de carbone.

7. Mésogènes selon la revendication 5, dans lesquels le groupe alkyle a de 2 à 6 atomes de carbone.

8. Mésogènes selon la revendication 5, dans lesquels ledit groupe alkyloxy comprend un motif alkyle ayant 6 atomes de carbone.

9. Mésogènes selon la revendication 1, dans lesquels lesdits groupes polymérisables sont sélectionnés parmi le groupe constitué de groupes acryloyloxy et de groupes méthacryloyloxy.

10. Mésogènes selon l'une quelconque des revendications 1 à 9, dans lesquels R² est sélectionné parmi le groupe constitué de groupes alkyles ayant d'environ 1 à 6 atomes de carbone et des groupes aryles.

11. Mésogènes selon l'une quelconque des revendications 1 à 9, dans lesquels R² est sélectionné parmi le groupe constitué de groupes méthyles, groupes t-butyles, groupes isopropyles, groupes butyles secondaires, et groupes phényles.

12. Mésogènes selon l'une quelconque des revendications 1 à 9, dans lesquels R² est sélectionné parmi le groupe constitué d'un groupe méthyle et d'un groupe t-butyle.

13. Mésogènes selon l'une quelconque des revendications 1 à 9, dans lesquels R¹ et R³ sont sélectionnés parmi le groupe constitué d'hydrogène et d'un groupe méthyle.

14. Mésogènes selon l'une quelconque des revendications 1 à 3 et 9 à 13, dans lesquels lesdits groupes polymérisables sont sélectionnés parmi le groupe constitué de groupes cinnamoyloxy, groupes acryloyloxy, groupes méthacryloyloxy, et groupes thioalkyloxy, groupes alkoxy acryloyloxy, et groupes alkyloxy méthacryloyloxy comprenant un motif alkyle ayant d'environ 2 à environ 12 atomes de carbone, ledit motif alkyle comprenant des groupes CH₂, dans lequel un ou plusieurs desdits groupes CH₂ peut-être indépendamment substitué par de l'oxygène, du soufre, ou un groupe ester ; à la condition qu'au moins 2 atomes de carbone séparent ledit oxygène ou ledit groupe ester.

15. Mésogènes selon la revendication 14, dans lesquels ledit motif alkyle a de 2 à 9 atomes de carbone.

16. Mésogènes selon la revendication 14, dans lesquels ledit motif alkyle a de 2 à 6 atomes de carbone.

17. Mésogènes selon la revendication 14, dans lesquels ledit motif alkyle a 6 atomes de carbone.

18. Mésogènes selon l'une quelconque des revendications 1 à 3 et 10 à 13, dans lesquels X comprend un groupe cinnamoyloxy.

19. Composition comprenant les mésogènes selon l'une quelconque des revendications 1 à 18, dans lesquels X est un groupe polymérisable, et une proportion d'environ 3 à environ 50 % molaire de X comprend un retardateur de cristallisation, ladite proportion et ledit groupe organique volumineux étant efficaces pour maintenir ledit état nématique et pour produire ladite rhéologie et l'aptitude au façonnage efficaces à la température ambiante, ledit retardateur de cristallisation comprenant au moins un atome d'halogène sélectionné parmi le groupe constitué de chlore, brome, et iode.

20. Composition selon la revendication 19, dans laquelle ladite proportion est d'environ 10 à environ 15 % molaire.

21. Mésogènes ou compositions selon l'une quelconque des revendications 1 à 20, dans lesquels au moins un parmi X ou Y comprend un agent de pontage.

22. Mésogènes ou compositions selon la revendication 21, dans lesquels ledit agent de pontage comprend un groupe dicarboxoyle comprenant d'environ 4 à environ 12 atomes de carbone.

23. Mésogènes ou compositions selon la revendication 21, dans lesquels ledit agent de pontage comprend un oligodialkylsiloxane comprenant des groupes alkyles comprenant d'environ 1 à environ 3 atomes de carbone.

24. Mésogènes ou compositions selon l'une quelconque des revendications 1 à 23, dans lesquels X a la structure générale suivante : 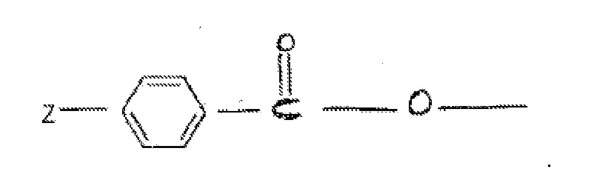 dans laquelle Z est sélectionné parmi le groupe constitué d'une fonctionnalité terminale et d'un groupe polymérisable.

25. Mésogènes ou compositions selon l'une quelconque des revendications 1 à 24, dans lesquels R¹ et R³ sont de l'hydrogène.

26. Composition comprenant les mésogènes ou compositions selon l'une quelconque des revendications 1 à 25.
